(19) Europäisches Patentamt
European Patent Office
Office européen des brevets

(11) EP 3 587 955 A1

(12) EUROPEAN PATENT APPLICATION

(43) Date of publication:
01.01.2020 Bulletin 2020/01

(51) Int Cl.:
F24S 30/425 (2018.01)    F24S 23/77 (2018.01)

(21) Application number: 18382454.9

(22) Date of filing: 21.06.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Rioglass Solar, S.A.
33695 Pola de Lena, Asturias (ES)

(72) Inventors:
• AINZ IBARRONDO, Félix
E-26200 Haro, La Rioja (ES)
• UBACH CARTATEGUI, Josep
E-33695 Pola de Lena, Lena, Asturias (ES)

(74) Representative: ABG Intellectual Property Law,
S.L.
Avenida de Burgos, 16D
Edificio Euromor
28036 Madrid (ES)

(54) SOLAR CONCENTRATING SYSTEM

(57)    The present invention relates to a solar concentrating system (1) and installation which comprises a plurality of solar collectors (10) configured for receiving, reflecting, and concentrating radiation in a focal point (F), and allows increasing the efficiency of current solar concentrating systems, such as those based on linear Fresnel collectors, by means of reducing focal distances and increasing the effective surface of the system.

Fig. 2

**Description**

Object of the Invention

The present invention relates to a solar concentrating system and installation which comprises a plurality of solar collectors configured for receiving, reflecting, and concentrating radiation in a focal point, and allows increasing the efficiency of current solar concentrating systems, such as those based on linear Fresnel collectors, by means of reducing focal distances and increasing the effective aperture of the system.

Background of the Invention

Several types of solar collectors capable of concentrating solar radiation in one or more focal points, such as parabolic trough collectors (PTCs) and linear Fresnel collectors, for example, are known in the field of solar energy. The technology based on PTC collectors has been subjected to greater industrial development in recent times. The harnessing of the energy of the sun is due to the precise geometry of the reflectors and to the fact that the collector and receiver as a whole track the position of the sun throughout the day. Despite having a lower output, linear Fresnel collectors allow optimizing the ratio between the investment made and the output obtained since they can be built with flat reflectors, which are easy to produce and maintain, and do not require movement in the receiver.

Linear Fresnel collectors use a plurality of reflectors, or mirrors, generally arranged in a horizontal plane. These reflectors are usually flat or have a slight curvature, i.e., having a very large radius of curvature compared to the other dimensions of the reflector. On the other hand, Fresnel reflectors are movable with respect to the structure that support them, such that they can be oriented according to the angle of incidence of the sun at all times throughout the day, either individually or synchronously. An example of this type of solution can be found in PCT patent application number WO2012025356 (A1), which describes a Fresnel solar collector with pivoting mirrors. However, linear Fresnel collectors have some inherent problems that are difficult to solve.

In a solar concentrating installation, there have to be free spaces between collectors, also called passageways, to allow access of personnel for maintenance tasks. In a solar field with PTCs, most of the solar radiation striking the surface of the solar field for high angles of incidence can be captured, including those striking the passageways, which allows harnessing the solar radiation for a prolonged time period, particularly during the early and late hours of the day. In turn, conventional linear Fresnel collectors cannot capture the radiation striking the surface not covered by the reflectors, for example the passageways, so the surface that is not covered tends to be minimized; in the case of the passageways, their width tends to be minimized in order to maximally harness the radiation striking the surface of the solar field.

Another unwanted effect in a solar concentrating installation is the shadows created by an object getting in the way of the light source (the sun, for example) and a reflector or a receiver. In the case of linear Fresnel collectors, the reflectors themselves are what get in the way and reduce the light radiation, in this case solar radiation, that is harnessed. This problem is usually solved by separating the reflectors, but this thereby increases the surface required for the installation of the collector, thereby reducing its cost-effectiveness. Furthermore, by increasing the separation between reflectors the focal distances also increase. This means that the reflectors are not equally efficient for all the angles of incidence, and that more reflectors must be installed in order to offset the effect of shadows.

Another particularity of linear Fresnel collectors is that the distance between the focal point and the reflectors increases as the reflectors are located farther away from the center of the collector, where the receiver is normally located. The focal distances are thereby different for each reflector. In an ideal collector, each reflector should have a different curvature to offset this phenomenon, but flat reflectors or reflectors with a small curvature that produces loss of efficiency are used in practice to minimize costs.

Although linear Fresnel reflectors ideally concentrate solar radiation in a focal line, the focal point is transformed into a focal surface in practice. In the particular case of curved mirrors, this optical aberration is known as astigmatism. The size of the focal surface will depend, among others, on manufacturing and assembly defects, on the shape of the reflector, and on the distance between the reflector and the focal point. Furthermore, as the angle of incidence of solar radiation increases, the dimensions of the focal surface will also increase, particularly after 30°.

The problems mentioned above, such as astigmatism, increasing focal distances, or the generation of shadows, become worse as the angle of incidence of the sun increases. Generally, the efficiency of a linear Fresnel collector decreases as the angle of incidence ($\vartheta$) of solar radiation increases, even when the system is designed with reflectors that are specific for each focal distance.

One of the few solutions known for the aforementioned problems consists of using *solar reconcentrators,* an element comprising a reflective surface in the form of a double trough shape, configured for redirecting the rays that have not struck towards the receiver tube. These reconcentrators require a special and very precise curving of the substrate, which is hard to assure under working conditions. Additionally, the materials must withstand high temperatures in a sustained manner and maintain high reflectance. Accordingly, they are complex and expensive and do not completely solve the aforementioned problems.

<u>Description of the Invention</u>

The present invention proposes a solution to the aforementioned problems by means of a solar concentrating system according to claim 1, and a solar concentrating installation according to claim 10. Preferred embodiments of the invention are defined in the dependent claims.

A first inventive aspect provides a *solar concentrating system adapted for concentrating the energy coming from solar radiation in a plurality of focal points, comprising a plurality of collectors C configured for receiving, reflecting, and concentrating radiation in a focal point, wherein each collector $C_i$, with $i \in \{1,...,n\}$, comprises*

> *a plurality of m reflectors R, where each reflector $R_j$, with $j \in \{1,...,m\}$, is flat or has a large radius of curvature compared to the other dimensions of the reflector, wherein*

- *each reflector $R_j$ comprises at least one substrate and one or more reflective surfaces, configured for reflecting solar radiation energy,*
- *each reflector $R_j$ has a substantially rectangular or square shape, having dimensions a, b, with $a \leq b$, and where b corresponds to the longitudinal direction, and*
- *each reflector $R_j$ is configured for rotating about a longitudinal axis L of the reflector $R_j$, preferably about its longitudinal axis of symmetry;*

> *at least one receiver configured for receiving the solar radiation concentrated by the plurality of reflectors and conveying the energy by means of a thermal fluid; wherein the at least one receiver is positioned substantially in the focal point, and wherein the at least one receiver comprises*

- *a conduit adapted for the circulation of a thermal fluid, and*

- *a structural element adapted for supporting the conduit and positioning it in the focal point;*

> *a support structure configured for positioning each reflector $R_j$ of the plurality of reflectors at a given height and distance $(h_j, d_j)$ for each reflector $R_j$ with respect to the at least one receiver, and configured for allowing each reflector $R_j$ to rotate an angle $\phi_j$ with respect to the horizontal plane, wherein the angle $\phi_j$ allows the reflector $R_j$ to reflect radiation in the focal point;*

*wherein the system is characterized in that the arrangement of the reflectors of each collector $C_i$ is such that the longitudinal axes $L_{ij}$ about which the reflectors $R_{ij}$ rotate are arranged in parallel and contained on at least one surface the tangent of which in each longitudinal axis $L_{ij}$ forms an angle $\lambda_{ij}$ with respect to the horizontal plane, wherein each angle $\lambda_{ij}$ verifies that if $\vartheta$ is the angle of incidence of solar radiation, then it holds that for the total annual solar irradiation time period comprised between 1% and 50% of the total time*

$$90\degree \geq \vartheta > 90\degree - \lambda_{ij} \; ; \; i \in \{1,...,n\}; \; j \in \{1,...,m\};$$

*and in that each collector $C_i$ is either separated from an adjacent collector $C_{i\pm1}$ by a passageway free of obstacles for the solar radiation, or is separated from an obstacle at a height comparable to the collector by a passageway, wherein the passageway has a width of at least one distance D, where*

$$D > 0.$$

Throughout this document, *focal point* will be understood as the geometric location where the rays of solar radiation reflected by the system converge. The receiver of the system is advantageously positioned in the focal point to harness the maximum amount of energy possible. There is a single focal point for a given section of the collector, and since it is a linear-type collector, the geometric location of the focal points of the infinite sections of a collector forms a line referred to as the focal line. For the sake of simplicity, it will be considered herein that *focal point* refers to both the focal point of a section and to the focal line of the collector, according to the context.

Throughout this document, it will be considered that the distance D separating a first collector from a second adjacent corresponds to the distance between the longitudinal axes of the reflectors arranged at the ends of the collectors.

The solar concentrating system is considered to comprise a plurality of *n* collectors, with *n* being a natural number other than zero; in its simplest case, the solar concentrating system could comprise a single collector, although for reasons that will be set forth below, the solar concentrating system will preferably comprise at least two collectors. For greater clarity, *i* has been chosen to identify any one collector C of a set of *n* collectors. Each of the collectors is configured for receiving, reflecting, and concentrating radiation in a focal point.

Each collector must likewise have at least one reflector, although each collector advantageously comprises a plurality of *m* reflectors, with *m* being a natural number other than zero. In a more particular embodiment, each collector comprises at least three reflectors. Even more advantageously, the reflectors have a quadrangular, square, or rectangular shape. These reflectors can be formed by one or more reflective elements, which are mirrors in a particular embodiment. In turn, the mirrors are formed by one or more reflective surfaces and a substrate, such as glass for example. For greater clarity, *j* has been chosen to identify any one reflector $R_j$ of a plurality of *m* reflectors belonging to a collector $C_i$. Any one reflector $R_{ij}$ of the plurality of *n* × *m* reflectors of the solar concentrating system is identified in a similar manner.

In a particular embodiment, the *m* reflectors of each collector Ci have a single focal point.

Throughout the present document, it will be considered that the function of the *receiver* is that of receiving the reflected solar radiation, transmitting the solar energy to a thermal fluid, and allowing the movement of this fluid. In order to allow the movement of the fluid, the receiver comprises a conduit suitable for performing the aforementioned functions. A wide range of fluids with a high specific heat capacity can be used as a thermal fluid, such as synthetic oil capable of withstanding high temperatures, for example. In a particular embodiment, the thermal fluid is water.

In a particular embodiment, each collector comprises a single receiver.

In another particular embodiment, the at least one receiver comprises a plurality of simple conduits adapted for conveying the thermal fluid; in a particular embodiment, the concentrating system comprises at least one evacuated receiver. It will be considered herein that an *evacuated receiver* comprises a vacuum chamber between the conduit through which the fluid circulates and the outer medium, wherein the function of this vacuum chamber is that of minimizing heat losses through conduction and convection in the thermal fluid conveyed by the conduit.

The *structural element* is configured for holding the receiver in its focal position and advantageously allows minimizing heat losses and withstanding the action of the elements, such as the action of the wind for example. It will be considered that this structural element is of the conventional type.

The *support structure* of the collector is configured for supporting the reflectors in a given position, withstanding the action of the elements, and allowing the rotation thereof about a longitudinal axis. It will be considered that the support structure is conventional and that it advantageously helps reduce shadows on the reflectors.

According to the present invention, the reflectors rotate with respect to a longitudinal axis in order to maintain the condition of reflection (i.e., solar radiation being reflected on the receiver whenever possible). To that end, if an angle $\phi_{ij}$ is defined for each reflector $R_{ij}$ with respect to the horizontal plane, the following must hold

$$\phi_{ij} = \frac{(90° - \vartheta) - \arctan\left(\frac{h_{ij}}{d_{ij}}\right)}{2}$$

wherein ($h_{ij}$, $d_{ij}$) is the height and the horizontal distance between a reflector $R_{ij}$ and the corresponding receiver, respectively, and $\vartheta$ is the angle of incidence of solar radiation. It will be understood herein that the angle of incidence of solar radiation is measured from the perpendicular to the horizontal plane, or in other words, the angle of incidence of solar radiation will be $\vartheta = 0°$ at midday, and $\vartheta = 90°$ when it strikes the horizontal plane in parallel.

As a way to solve the aforementioned problems, the present invention proposes a solar concentrating system in which instead of being contained in a single horizontal plane as in the conventional Fresnel solution, the reflectors are arranged at different heights, with their longitudinal axes arranged in parallel. According to this invention, the longitudinal axes of the reflectors define a surface which meets the condition that the angle ($\lambda_{ij}$) formed by a straight line tangent to the surface on each longitudinal axis $L_{ij}$ with the horizontal plane must hold for a specific time period:

$$\vartheta > 90° - \lambda_{ij},$$

or in other words, for a given time period, solar radiation strikes between the tangent straight line in a longitudinal axis and the horizontal plane. In order to prevent the reflectors themselves from creating shadows on the remaining reflectors, the preceding condition must be held for the minimum angle $\lambda_{ij}$ of the *n* × *m* angles $\lambda$. In practice, this condition is held for the first and last hours of the day. The exact duration of the period will depend on both the latitude and the date, with this being a function of the azimuth and the elevation of the sun.

According to the present invention, the system comprises a space without obstacles that produce shadows between two adjacent collectors. Throughout this document, this space will also be referred to as *passageway,* and it allows access of personnel for construction, operating, and maintenance tasks. Furthermore, the passageway allows the incidence of solar radiation on the reflectors for high angles $\vartheta$, particularly when the condition $\vartheta > 90° - \lambda_{ij}$ is held due to the absence of obstacles.

It will be considered herein that *upper aperture* ($A_U$) is defined as the maximum width between the ends of a collector measured in parallel to a horizontal plane. This value is used to calculate the energy reflected by a conventional linear Fresnel concentrator at a given time (being proportional to the cosine of $\vartheta$), and it allows establishing a reference value to compare the efficiency of the present invention. So for calculating system efficiency, an aperture which will be referred to as lateral aperture and is defined below must be added to the (conventional) upper aperture. It must be understood herein that even though reference is made to linear magnitudes (e.g., distance, width, etc.), these magnitudes actually correspond to surfaces expressed in terms of widths per unit of length of the collector.

The arrangement of the reflectors at a different level together with the existence of a passageway between adjacent collectors allows better harnessing of the solar radiation at high angles of incidence. Considering that a passageway measures a distance D, then the distance that allows access for solar radiation through the side of the collector is referred to as *lateral aperture* ($A_L$) of a collector.

The sum of the lateral and upper apertures is also advantageously referred to as total effective aperture, $A_{Te}$.

In a particular embodiment, *if an oblique plane containing at least the longitudinal axes of two reflectors of a collector $C_i$ is defined, said plane forms an angle $\varepsilon_i$ with the horizontal plane, and it is verified that for the total annual solar irradiation time period comprised between 1% and 50% of the total time*

$$90° \geq \vartheta > 90° - \varepsilon_i \; ; \; i \in \{1, ..., n\}.$$

Advantageously, the solar concentrating system allows reflecting the radiation that the reflectors receive through the upper aperture $A_U$, defined as the maximum width between the ends of a collector measured in parallel to a horizontal plane, and through the lateral aperture $A_L$, defined as:

$$A_L = D \cdot \sin\left(\arctan\frac{B \cdot \sin\varepsilon_i}{D + B \cdot \cos\varepsilon_i}\right) \; ; \; i \in \{1, ..., n\}.$$

with B being the distance between the longitudinal axes defining the oblique plane forming an angle $\varepsilon_i$ with the horizontal plane. Advantageously, according to this invention the angle $\varepsilon_i$ formed by the plane containing at least the longitudinal axes of two reflectors with the horizontal plane must hold for a specific time period:

$$\vartheta > 90° - \varepsilon_i,$$

or in other words, for a given time period, solar radiation strikes between the plane containing the longitudinal axes and the horizontal plane. Advantageously, according to this invention the passageway allows the incidence of solar radiation on the reflectors for high angles $\vartheta$, particularly when the condition $\vartheta > 90° - \varepsilon_i$ is held due to the absence of obstacles.

In a particular embodiment, *the at least two longitudinal axes contained in the oblique plane correspond to at least two reflectors which are located at a greater height and at a lower height of the collector.* In another particular embodiment, the at least two longitudinal axes contained in the oblique plane correspond to at least two reflectors located at the ends of the collector.

In a particular embodiment, *the reflectors are substantially aligned according to a North-South geographic orientation.*

Advantageously, the arrangement of the reflectors according to a North-South orientation allows the reflectors to track the movement of the sun throughout the day by means of a rotational movement according to a longitudinal axis, and reflect solar radiation onto a receiver for most of the day. It will furthermore be understood that the North-South orientation of the reflectors allows certain variation in the orientation.

In a particular embodiment, *each reflector $R_{ij}$ of the plurality of $n \times m$ reflectors is arranged at a distance to the "at least one receiver" defined as*

$$\sqrt{h_{ij}^2 + d_{ij}^2}$$

*wherein the ratio between the distances to the at least one receiver of any two reflectors of the plurality of n × m reflectors is equal to a value comprised between 0.7 and 1.3.*

In a particular embodiment, the distances

$$\sqrt{h_{ij}^2 + d_{ij}^2}$$

to the at least one receiver of each reflector $R_{ij}$ of the plurality of n × m reflectors are substantially equal and furthermore substantially coincide with the focal distances of the reflectors.

Advantageously, positioning the reflectors such that they have very similar distances to the receiver and such that they grow closer with the focal distance of the collector allows reducing the astigmatism of the reflector and increasing efficiency of the concentrating system. At the same time, the position of the reflectors also allows partially reducing aberrations for high angles of incidence $\vartheta$.

In a particular embodiment, *the width D of the passageway substantially measures between 1 and 3 meters.*

In another particular embodiment, *the width D of the passageway holds that*

$$D = \frac{A_U}{2}$$

*where $A_U$ is the upper aperture of a collector measured in parallel to the horizontal plane between its endmost points.*

Advantageously, a concentrating system such as the one described allows for better harnessing of the surface and of the solar radiation than a conventional collector with the same collector width does.

Even more advantageously, for a passageway width equal to half of the upper aperture of the collector, it is verified that the increase in system efficiency is maximum for a minimum increase in the installation cost.

In a particular embodiment, the solar concentrating system *further comprises at least one actuation device to vary the angles $\phi_{ij}$ of the reflector $R_{ij}$, in which the movement of each reflector $R_{ij}$ can be either individual or synchronous with respect to the other reflectors.*

To harness the greatest amount of energy, the reflectors must constantly change their position throughout the day, tracking the sun. To that end, the actuation device or devices, or actuators, rotate the reflectors such that the condition of reflection is held. Since the angle $\phi_{ij}$ depends on the position of the reflector $R_{ij}$ with respect to the receiver, preferably the movement should be individual. Advantageously, the output of each reflector can be maximized by means of an individual adjustment of its corresponding angle $\phi_{ij}$.

However, the incorporation of one actuator for each reflector may be impracticable. One way to reduce the installation cost may be by installing, for each collector, a single actuator which produces the required rotation in each reflector by means of a mechanism.

In another embodiment, *the at least one receiver comprises a vacuum tube-type conduit, or it comprises a plurality of simple conduits.*

The evacuated conduits or vacuum tubes are widely applied in parabolic trough collectors and they are considered to have a high output. For that reason, the receivers advantageously incorporate this type of conduit to obtain a high output. In an alternative manner, a plurality of simple conduits having fewer benefits but a lower cost can be used.

In another particular embodiment, *each angle $\lambda_{ij}$ holds the following condition:*

$$\lambda_{11} = \lambda_{12} = \cdots = \lambda_{nm} = \lambda \;;\; i \in \{1, \dots, n\}; \; j \in \{1, \dots, m\}.$$

The axes of the reflectors are thereby aligned according to an oblique plane. Advantageously, the arrangement of the collectors according to an oblique plane with a specific angle with respect to the horizon simplifies the construction of the support structure, which can be built from conventional straight beams.

In yet another particular embodiment, *the following condition is held:*

$$\lambda = 24\,°.$$

Advantageously, for an installation with conventional dimensions, the angle of 24° allows on one hand easy access to the receivers located at the ends of the collector, and on the other hand high harnessing of the lateral aperture of the concentrator.

In another particular embodiment, it holds that

$$\lambda = \varepsilon_i = 24\,°.$$

In another embodiment, *the plurality of n reflectors of each collector $C_i$ are grouped in two sections symmetrically arranged on either side of the at least one receiver.*

According to this embodiment, the reflectors are located on both sides of the receiver, preferably ordered in a symmetrical manner, such that as the solar radiation changes its angle of incidence throughout the day, there is always one section of the reflectors that receives a maximum amount of solar radiation. Advantageously, the described arrangement allows arranging the reflectors such that the ratio between the distances to the receiver of any two reflectors is equal to a value comprised between 0.7 and 1.3. Advantageously, the described arrangement allows arranging the reflectors such that they are substantially at the same distance from the receiver, preferably at its focal distance.

In another particular embodiment, *the surface on which the longitudinal axes about which the reflectors rotate are contained is a quadric surface, particularly a circular cylinder, a hyperbolic cylinder, a parabolic cylinder, or an elliptical cylindrical, or sections of the foregoing.*

Advantageously, the arrangement of the reflectors according to a quadric surface, particularly arranging the reflectors in a symmetrical manner on both sides of the receiver according to a surface of a hyperbolic half cylinder, allows making the performance of the collector more similar to that of a conventional parabolic trough collector.

In a particular embodiment, the surface on which the longitudinal axes about which the reflectors rotate are contained is a divided plane comprising two symmetrical branches or arms that are oblique to the horizontal plane.

Advantageously, during the total annual solar irradiation time period comprised between 1% and 50% of the total time, solar radiation strikes the collector between one of the planes formed by one of the branches or arms of the collector and the horizontal plane.

In a second inventive aspect, the invention provides a *solar concentrating installation comprising a solar concentrating system according to the first inventive aspect.* The installation advantageously comprises the elements required to harness or transform the thermal energy of the fluid into another form of energy, electric energy, for example, as appropriate.

All the features and/or steps of methods described in this specification (including the claims, description, and drawings) may be combined in any combination with the exception of combinations of such mutually exclusive features.

Description of the Drawings

These and other features and advantages of the invention will be better understood based on the following detailed description of a preferred embodiment given only by way of nonlimiting illustrative example in reference to the attached drawings.

Figure 1 shows a system with two collectors separated by a passageway, seen from the front.
Figure 2 shows a perspective view of a system with two collectors separated by a passageway.
Figure 3 shows the geometric relationships between the angle of incidence of solar radiation, the position of the reflectors, etc.
Figures 4a-4b show the geometric definition of the lateral aperture for two embodiments of the system.

Detailed Description of the Invention

The present invention allows an improvement in solar concentrating systems with respect to conventional linear Fresnel concentrating systems, and with a lower cost than concentrating systems based on parabolic trough concentrators.

*Embodiment*

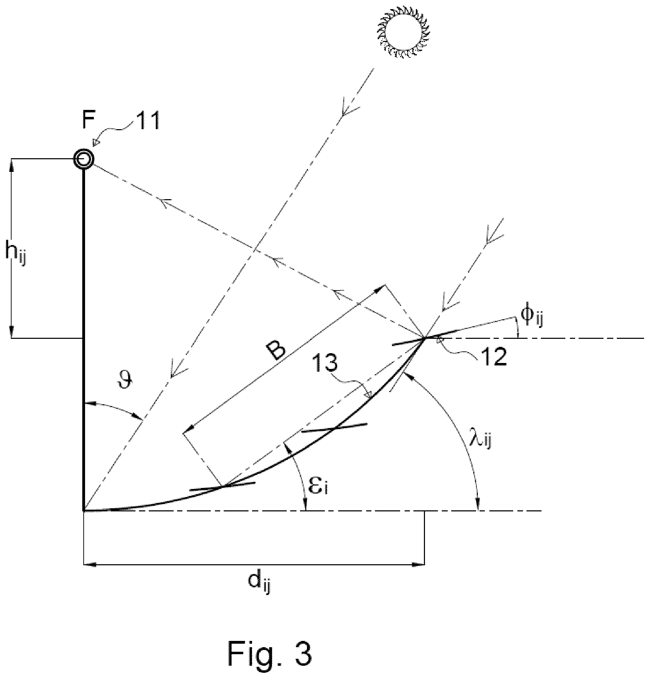

In a specific embodiment, the concentrating system (1) is located close to the city of Seville, corresponding to a latitude of 37° 26' 38" North, and simply stated, it will be considered that the concentrating system (1) comprises only two collectors (10), with a passageway (14) between them as shown in Figure 3. Advantageously, both collectors (10) are arranged in parallel and oriented according to a North-South axis to harness the greatest amount of energy possible. Each collector (10) comprises a set of twelve reflectors (12) with a small curvature having a radius between 6000 and 8000 mm, arranged following a symmetrical broken plane, which would be the equivalent of a V-shaped arrangement of the reflectors (12); some drawings only show a part of the reflectors for the sake of simplicity. The reflectors (12) would thereby be divided into two arms or branches in each collector (10); if the reflectors are numbered from left to right, looking at them from the South, the first branch or left branch would comprise reflectors 1 to 6, and the second branch or right branch would comprise reflectors 7 to 12, in each collector (10). This arrangement is particularly advantageous due to its simplicity, since the support structure (13) can be built in a conventional manner by means of straight beams or profiles. It thereby holds that the ratio between the distances to the receiver (11) of any two reflectors (12) is equal to a value comprised between 0.7 and 1.3, at least partly reducing distortions.

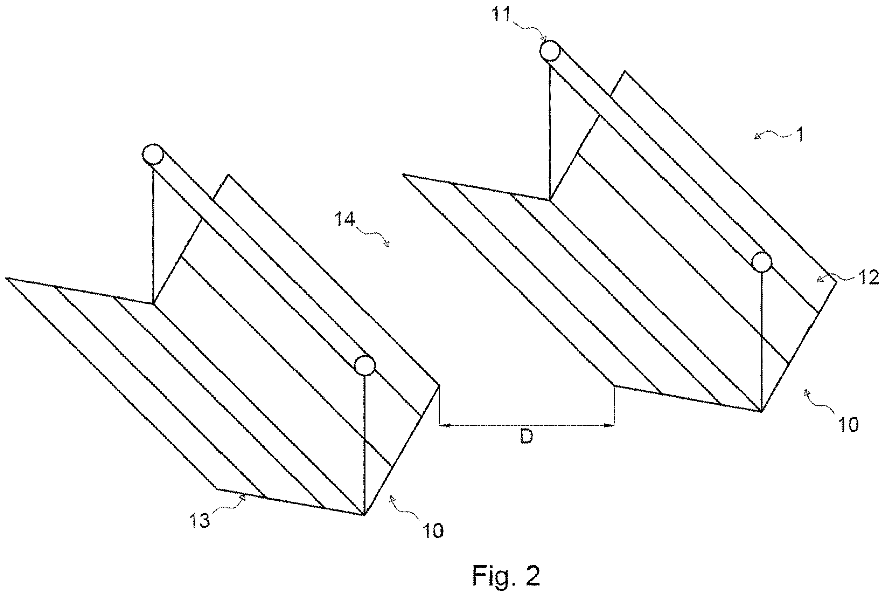

As shown in Figure 2, each collector (10) comprises a linear receiver (11) measuring about 4 m in length, formed by a conduit (11.1) with a vacuum chamber, or evacuated tube, for conveying the thermal fluid, which is overheated water in this example. The receiver (11) is supported by means of a structural element (11.2), which is a simple structure attached to the support structure (13) and keeping the receiver (11) in a high position coinciding with the focal point (F) of the collector (10) .

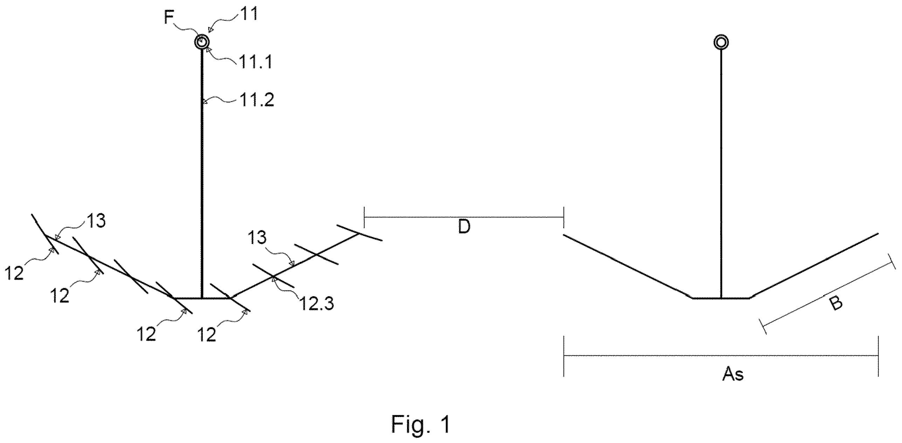

In this embodiment shown in Figures 1 and 3, each reflector (12) is formed by three flat mirrors measuring 1320 mm in length (*b*) by 529 mm in width (*a*), arranged one after the other parallel to the linear receiver (11), and is assembled on a frame capable of rotating about a longitudinal axis (12.3) of the mirrors an angle $\phi_{ij}$ with respect to the horizontal plane; in this example the longitudinal axis (12.3) coincides with the axis of symmetry of the mirrors.

In each collector (10) the twelve reflectors (12) are grouped in two sections of six reflectors (12), with each section arranged on either side of the receiver (11). The reflectors (12) of one of the sections are arranged with their longitudinal axes (12.3) in parallel, and with their longitudinal axes (12.3) contained in an oblique plane with respect to the horizontal plane. In this example, the plane containing the longitudinal axes (12.3) of the reflectors (12) forms an angle $\lambda = 24°$ with the horizontal plane. Accordingly, the angles $\varepsilon_1$, $\varepsilon_2$, of each of the two collectors are equal to $\lambda$.

With an angle $\lambda = 24°$, the reflectors of the ends, i.e., those which are at a greater height, are furthermore rendered accessible for an operator with relative ease, since they are at about 1.25 m from the lower level.

This angle depends on the latitude of Seville and corresponds to the value for which the angle of incidence of the sun ($\vartheta$) holds that

$$90° \geq \vartheta > 90° - \lambda_{ij} \; ; \; i \in \{1, ..., n\}; \; j \in \{1, ..., m\};$$

for a third (⅓) of the time in which there is solar radiation, or in other words a third (⅓) of the daytime hours. This relationship means that for 33.33% of the daytime hours of the year, solar radiation strikes below the plane containing the longitudinal axes (12.3) of the reflectors (12), or alternatively, the angle of incidence of the sun is $\vartheta > 66°$, which would corresponds to the first and to the last hours of the day.

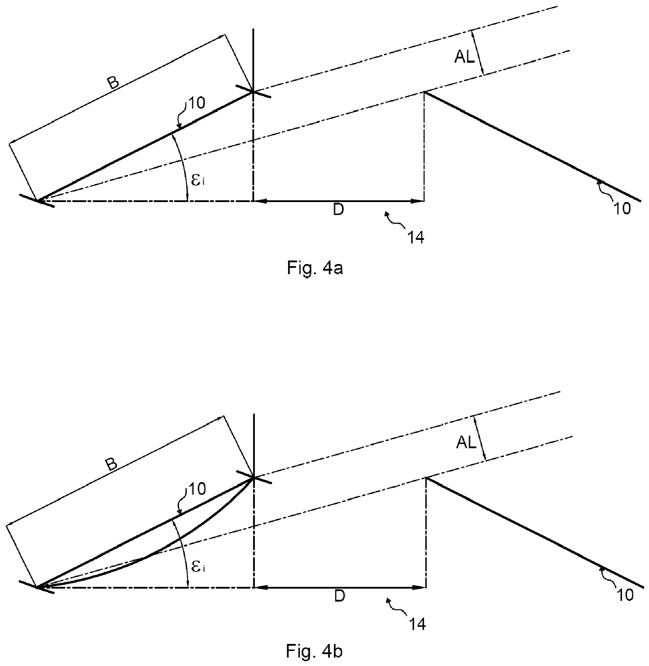

Therefore, by taking a time of the day in which $\vartheta = 70°$ (see Figures 3 and 4) the condition of lateral aperture is held, and for reflector $R_{112}$ (i.e., the last reflector of the first collector: $i = 1$; $j = 12$) with its height and its distance to receiver $h_{112} = 2042$ mm; $d_{112} = 2787$ mm:

$$\phi_{112} = \frac{(90° - \vartheta) - \arctan\left(\frac{2042 \, mm}{2787 \, mm}\right)}{2} = -8.115°$$

which is the angle that holds the condition of reflection in the lateral aperture mode. Parameter B in this case measures B = 2701 mm. In this case, the collector has a width of 6024 mm, and its upper aperture is:
$A_U = 6024$ mm so the width of the passageway D measures:

$$D = \frac{6024 \, mm}{2} = 3012 \, mm$$

$$A_L = D \cdot \sin\left(\arctan\frac{B \cdot \sin\varepsilon_1}{D + \cos\varepsilon_1}\right) =$$

$$= 3012 \, mm \cdot \sin\left(\arctan\frac{2701 \, mm \cdot \sin 24°}{3012 \, mm + 2701 \, mm \cdot \cos 24°}\right)$$

$$A_L = 592.1 \, mm$$

*Tests*

As discussed, the embodiment described above allows an improvement in optical output of 29.2% for the case of an isolated concentrator, and of 13.3% for the case of a collector surrounded by passageways measuring 3 m (D = 3 m), according to the described solar concentrating system, for periods of time in which the angle of elevation of the sun is below 24°, compared to a concentrating system according to normal practice in the field of the art.

In the context of the present invention, optical output is understood as the ratio between radiation reaching the receiver and available radiation.

To arrive at these conclusions, the inventors performed a computational simulation of the calculation of optical output for a collector like the one described above ($\lambda$ = 24°), located at the same latitude as Seville, comprising a collector measuring 28 m in length and having 175.8 m$^2$ of reflective surface, in three particular cases: a collector without a lateral aperture (equivalent to a collector without a passageway), an isolated collector, and a collector with passageways measuring 3 m on both sides.

The computational calculation was performed by means of *Tonatiuh* software, an open source program, and was launched by the Centro Nacional de Energías Renovables (CENER); version 2.2.4 of the software is available at http://iat-cener.github.io/tonatiuh/. *Tonatiuh* software allows the optical-energetic simulation of solar concentrating systems. It combines ray tracing with the Monte Carlo method to simulate the optical performance of a wide range of systems.

In addition to the design values set forth above, the following calculation parameters were considered:

| Position of the sun | |
|---|---|
| Azimuth | $Az \in$ [0°, 180°] *at intervals of* 10° |
| Elevation | $El \in$ [0°, 24°] *at intervals of* 3° |

| | |
|---|---|
| Radiation | 10$^6$ rays. |
| Total square error (*Sigma slope*) | $\sigma_{Slope}$ = 1.8 |
| Sunshape | "Buie" |
| *Circunsolar radiation* | CSR = 0.2 |
| Irradiance | 1000 W/m$^2$ |

According to the preceding values, *Tonatiuh* software provided 171 results of optical output for each case, shown in the following three tables. The highlighted cells show the values that were physically possible for the indicated latitude (Seville).

Table 1. Optical outputs for the case without a passageway (D = 0; reference case):

| Az\El | 0° | 3° | 6° | 9° | 12° | 15° | 18° | 21° | 24° |
|---|---|---|---|---|---|---|---|---|---|
| 0° | 0.00004 | 0.00066 | 0.00433 | 0.02797 | 0.06301 | 0.10641 | 0.15357 | 0.20290 | 0.25397 |
| 10° | 0.01398 | 0.01894 | 0.03409 | 0.05784 | 0.08881 | 0.12570 | 0.16600 | 0.20943 | 0.25925 |
| 20° | 0.02854 | 0.04675 | 0.06840 | 0.09651 | 0.13115 | 0.16691 | 0.20341 | 0.24124 | 0.28135 |
| 30° | 0.02993 | 0.06016 | 0.09142 | 0.12210 | 0.15374 | 0.19789 | 0.23554 | 0.27309 | 0.31070 |
| 40° | 0.02851 | 0.06728 | 0.10550 | 0.13582 | 0.16960 | 0.20584 | 0.24879 | 0.28740 | 0.32431 |
| 50° | 0.02528 | 0.06842 | 0.10955 | 0.14313 | 0.17823 | 0.21162 | 0.24736 | 0.29418 | 0.33735 |
| 60° | 0.02076 | 0.06675 | 0.10987 | 0.14963 | 0.18118 | 0.21931 | 0.25344 | 0.28330 | 0.33645 |
| 70° | **0.01562** | **0.06399** | **0.10794** | **0.15140** | **0.18472** | **0.21914** | 0.25478 | 0.29160 | 0.33863 |
| 80° | **0.00970** | **0.06047** | **0.10576** | **0.14978** | **0.18257** | **0.21980** | **0.25856** | **0.29184** | 0.33845 |
| 90° | **0.00373** | **0.05563** | **0.10205** | **0.14547** | **0.18000** | **0.21703** | **0.25553** | **0.29164** | **0.32273** |
| 100° | **0.00970** | **0.06047** | **0.10576** | **0.14978** | **0.18257** | **0.21980** | **0.25856** | **0.29184** | **0.33845** |

(continued)

| Az\El | 0° | 3° | 6° | 9° | 12° | 15° | 18° | 21° | 24° |
|---|---|---|---|---|---|---|---|---|---|
| **110°** | **0.01562** | **0.06399** | **0.10794** | **0.15140** | **0.18472** | **0.21914** | **0.25478** | **0.29160** | **0.33863** |
| **120°** | **0.02076** | **0.06675** | **0.10987** | **0.14963** | **0.18118** | **0.21931** | **0.25344** | **0.28330** | **0.33645** |
| **130°** | 0.02528 | 0.06842 | 0.10955 | **0.14313** | **0.17823** | **0.21162** | **0.24736** | **0.29418** | **0.33735** |
| **140°** | 0.02851 | 0.06728 | 0.10550 | 0.13582 | 0.16960 | 0.20584 | **0.24879** | **0.28740** | **0.32431** |
| **150°** | 0.02993 | 0.06016 | 0.09142 | 0.12210 | 0.15374 | 0.19789 | 0.23554 | 0.27309 | **0.31070** |
| **160°** | 0.02854 | 0.04675 | 0.06840 | 0.09651 | 0.13115 | 0.16691 | 0.20341 | 0.24124 | 0.28135 |
| **170°** | 0.01398 | 0.01894 | 0.03409 | 0.05784 | 0.08881 | 0.12570 | 0.16600 | 0.20943 | 0.25925 |
| **180°** | 0.00004 | 0.00066 | 0.00433 | 0.02797 | 0.06301 | 0.10641 | 0.15357 | 0.20290 | 0.25397 |

Table 2. Optical outputs for the case of an isolated collector (D → ∞) :

| Az\El | 0° | 3° | 6° | 9° | 12° | 15° | 18° | 21° | 24° |
|---|---|---|---|---|---|---|---|---|---|
| **0°** | 0.00005 | 0.00064 | 0.00419 | 0.02796 | 0.06318 | 0.10563 | 0.15402 | 0.20298 | 0.25342 |
| **10°** | 0.01433 | 0.01978 | 0.03402 | 0.05840 | 0.08981 | 0.12616 | 0.16629 | 0.21061 | 0.25829 |
| **20°** | 0.03982 | 0.05888 | 0.07886 | 0.09757 | 0.13151 | 0.16669 | 0.20366 | 0.24180 | 0.28221 |
| **30°** | 0.06059 | 0.08802 | 0.11789 | 0.14340 | 0.16408 | 0.19917 | 0.23575 | 0.27344 | 0.30925 |
| **40°** | 0.07642 | 0.10905 | 0.14393 | 0.17581 | 0.20113 | 0.22265 | 0.25231 | 0.28856 | 0.32364 |
| **50°** | 0.08944 | 0.12089 | 0.15963 | 0.19499 | 0.22549 | 0.24944 | 0.26742 | 0.29832 | 0.33755 |
| **60°** | 0.09677 | 0.13012 | 0.16941 | 0.20704 | 0.24179 | 0.26932 | 0.28949 | 0.30454 | 0.34229 |
| **70°** | **0.10250** | **0.13602** | **0.17677** | **0.21559** | **0.25202** | **0.28116** | 0.30364 | 0.32409 | 0.34646 |
| **80°** | **0.10442** | **0.13749** | **0.17957** | **0.21849** | **0.25682** | **0.28605** | **0.31282** | **0.33174** | 0.34841 |
| **90°** | **0.10019** | **0.13540** | **0.17658** | **0.21684** | **0.25641** | **0.28532** | **0.31320** | **0.33326** | **0.34640** |
| **100°** | **0.10442** | **0.13749** | **0.17957** | **0.21849** | **0.25682** | **0.28605** | **0.31282** | **0.33174** | **0.34841** |
| **110°** | **0.10250** | **0.13602** | **0.17677** | **0.21559** | **0.25202** | **0.28116** | **0.30364** | **0.32409** | **0.34646** |
| **120°** | **0.09677** | **0.13012** | **0.16941** | **0.20704** | **0.24179** | **0.26932** | **0.28949** | **0.30454** | **0.34229** |
| **130°** | 0.08944 | 0.12089 | 0.15963 | **0.19499** | **0.22549** | **0.24944** | **0.26742** | **0.29832** | **0.33755** |
| **140°** | 0.07642 | 0.10905 | 0.14393 | 0.17581 | 0.20113 | 0.22265 | **0.25231** | **0.28856** | **0.32364** |
| **150°** | 0.06059 | 0.08802 | 0.11789 | 0.14340 | 0.16408 | 0.19917 | 0.23575 | 0.27344 | **0.30925** |
| **160°** | 0.03982 | 0.05888 | 0.07886 | 0.09757 | 0.13151 | 0.16669 | 0.20366 | 0.24180 | 0.28221 |
| **170°** | 0.01433 | 0.01978 | 0.03402 | 0.05840 | 0.08981 | 0.12616 | 0.16629 | 0.21061 | 0.25829 |
| **180°** | 0.00005 | 0.00064 | 0.00419 | 0.02796 | 0.06318 | 0.10563 | 0.15402 | 0.20298 | 0.25342 |

Table 3. Optical outputs for the case with a passageway measuring 3 m (D = 3 m; embodiment):

| Az\El | 0° | 3° | 6° | 9° | 12° | 15° | 18° | 21° | 24° |
|---|---|---|---|---|---|---|---|---|---|
| 0° | 0.00004 | 0.00069 | 0.00417 | 0.02790 | 0.06309 | 0.10681 | 0.15435 | 0.20345 | 0.25325 |
| 10° | 0.01449 | 0.01989 | 0.03364 | 0.05846 | 0.08931 | 0.12622 | 0.16680 | 0.21063 | 0.25897 |
| 20° | 0.03639 | 0.05396 | 0.07767 | 0.09744 | 0.12979 | 0.16645 | 0.20282 | 0.24263 | 0.28116 |
| 30° | 0.03855 | 0.07065 | 0.10901 | 0.14251 | 0.16417 | 0.19994 | 0.23557 | 0.27466 | 0.30887 |

(continued)

| Az\El | 0° | 3° | 6° | 9° | 12° | 15° | 18° | 21° | 24° |
|---|---|---|---|---|---|---|---|---|---|
| 40° | 0.03743 | 0.08053 | 0.11850 | 0.17029 | 0.19796 | 0.22447 | 0.25141 | 0.28698 | 0.32358 |
| 50° | 0.03273 | 0.08225 | 0.12330 | 0.17188 | 0.22200 | 0.24364 | 0.26895 | 0.29890 | 0.33574 |
| 60° | 0.02673 | 0.08020 | 0.12857 | 0.16892 | 0.22770 | 0.26501 | 0.28859 | 0.30424 | 0.34210 |
| 70° | **0.02052** | **0.07836** | **0.12390** | **0.16773** | **0.22798** | **0.28089** | 0.29743 | 0.32520 | 0.34394 |
| 80° | **0.01309** | **0.07451** | **0.12083** | **0.16495** | **0.22111** | **0.27795** | **0.30549** | **0.33132** | 0.34777 |
| 90° | **0.00561** | **0.07029** | **0.11488** | **0.15945** | **0.21929** | **0.27846** | **0.30814** | **0.33338** | **0.34618** |
| 100° | **0.01309** | **0.07451** | **0.12083** | **0.16495** | **0.22111** | **0.27795** | **0.30549** | **0.33132** | **0.34777** |
| 110° | **0.02052** | **0.07836** | **0.12390** | **0.16773** | **0.22798** | **0.28089** | **0.29743** | **0.32520** | **0.34394** |
| 120° | **0.02673** | **0.08020** | **0.12857** | **0.16892** | **0.22770** | **0.26501** | **0.28859** | **0.30424** | **0.34210** |
| 130° | 0.03273 | 0.08225 | 0.12330 | **0.17188** | **0.22200** | **0.24364** | **0.26895** | **0.29890** | **0.33574** |
| 140° | 0.03743 | 0.08053 | 0.11850 | 0.17029 | 0.19796 | 0.22447 | **0.25141** | **0.28698** | **0.32358** |
| 150° | 0.03855 | 0.07065 | 0.10901 | 0.14251 | 0.16417 | 0.19994 | 0.23557 | 0.27466 | **0.30887** |
| 160° | 0.03639 | 0.05396 | 0.07767 | 0.09744 | 0.12979 | 0.16645 | 0.20282 | 0.24263 | 0.28116 |
| 170° | 0.01449 | 0.01989 | 0.03364 | 0.05846 | 0.08931 | 0.12622 | 0.16680 | 0.21063 | 0.25897 |
| 180° | 0.00004 | 0.00069 | 0.00417 | 0.02790 | 0.06309 | 0.10681 | 0.15435 | 0.20345 | 0.25325 |

## Conclusions

For the cases corresponding to Tables 2 and 3, considering only the sum of the outputs that are physically possible for the indicated latitude, the sums of optical outputs were compared to the reference case, i.e., the case without a passageway (D = 0 m), and the following was found:

- For the case of an isolated collector (Table 2), the optical output improves by 29.2%.
- For the case of a concentrating system with passageways measuring 3 m (Table 3), the optical output improves by 13.3%.

## Claims

1. A solar concentrating system (1) adapted for concentrating the energy coming from solar radiation in a plurality of focal points (F), comprising a plurality of collectors C (10) configured for receiving, reflecting, and concentrating radiation in a focal point (F), wherein each collector $C_i$ (10), with $i \in \{1,...,n\}$, comprises

   a plurality of $m$ reflectors R (12), where each reflector $R_j$, with $j \in \{1,...,m\}$, is flat or has a large radius of curvature compared to the other dimensions of the reflector (12), wherein

   - each reflector $R_j$ (12) comprises at least one substrate (12.1) and one or more reflective surfaces (12.2), configured for reflecting solar radiation energy,
   - each reflector $R_j$ (12) has a substantially rectangular or square shape, having dimensions $a, b,$ with $a < b,$ and where $b$ corresponds to the longitudinal direction, and
   - each reflector $R_j$ (12) is configured for rotating about a longitudinal axis L (12.3) of the reflector $R_j$ (12), preferably about its longitudinal axis of symmetry;

   at least one receiver (11) configured for receiving the solar radiation concentrated by the plurality of reflectors (12) and conveying the energy by means of a thermal fluid; wherein the at least one receiver (11) is positioned substantially in a focal point (F), and wherein the at least one receiver (11) comprises

   - a conduit (11.1) adapted for the circulation of a thermal fluid, and

- a structural element (11.2) adapted for supporting the conduit (11.1) and positioning it in the focal point (F);

a support structure (13) configured for positioning each reflector $R_j$ (12) of the plurality of reflectors (12) at a given height and distance ($h_j$, $d_j$) for each reflector $R_j$ (12) with respect to the at least one receiver (11), and configured for allowing each reflector $R_j$ (12) to rotate an angle $\phi_j$ with respect to the horizontal plane, wherein the angle $\phi_j$ allows the reflector $R_j$ (12) to reflect radiation in the focal point (F);

wherein the system (1) is **characterized in that** the arrangement of the reflectors (12) of each collector $C_i$ (10) is such that the longitudinal axes $L_{ij}$ (12.3) about which the reflectors $R_{ij}$ (12) rotate are arranged in parallel and contained on at least one surface the tangent of which in each longitudinal axis $L_{ij}$ (12.3) forms an angle $\lambda_{ij}$ with respect to the horizontal plane, wherein each angle $\lambda_{ij}$ verifies that if $\vartheta$ is the angle of incidence of solar radiation, then it holds that for the total annual solar irradiation time period comprised between 1% and 50% of the total time

$$90\,° \geq \vartheta > 90\,° - \lambda_{ij}\, ;\ i \in \{1, \dots, n\};\ j \in \{1, \dots, m\};$$

and

each collector $C_i$ (10) is either separated from an adjacent collector $C_{i\pm1}$ by a passageway (14) free of obstacles for the solar radiation, or is separated from an obstacle at a height comparable to the collector by a passageway (14), wherein the passageway (14) has a width of at least one distance D, measured at the narrowest point between the collectors (10), where

$$D > 0.$$

2. The solar concentrating system (1) according to the preceding claim, **characterized in that** if an oblique plane containing at least the longitudinal axes (12.3) of two reflectors (12) of a collector $C_i$ (10) is defined, said plane forms an angle $\varepsilon_i$ with the horizontal plane, and it is verified that for the total annual solar irradiation time period comprised between 1% and 50% of the total time

$$90\,° \geq \vartheta > 90\,° - \varepsilon_i\, ;\ i \in \{1, \dots, n\}.$$

3. The solar concentrating system (1) according to the preceding claim, **characterized in that** the at least two longitudinal axes (12.3) contained in the oblique plane correspond to at least two reflectors (12) which are located at a greater height and at a lower height of the collector (10).

4. The solar concentrating system (1) according to any of the preceding claims, **characterized in that** the reflectors (12) are substantially aligned according to a North-South geographic orientation.

5. The solar concentrating system (1) according to any of the preceding claims, **characterized in that** each reflector $R_{ij}$ (12) of the plurality of $n \times m$ reflectors (12) is arranged at a distance to the at least one receiver (11) defined as

$$\sqrt{{h_{ij}}^2 + {d_{ij}}^2}$$

wherein the ratio between the distances to the at least one receiver (11) of any two reflectors of the plurality of $n \times m$ reflectors (12) is equal to a value comprised between 0.7 and 1.3.

6. The solar concentrating system (1) according to any of the preceding claims, **characterized in that** the width D of the passageway (14) substantially measures between 1 and 3 meters.

7. The solar concentrating system (1) according to any of the preceding claims, **characterized in that** the width D of the passageway (14) holds that

$$D = \frac{A_U}{2}$$

where $A_U$ is the upper aperture a collector (10) measured in parallel to the horizontal plane between its end points.

8. The solar concentrating system (1) according to any of the preceding claims, **characterized in that** it further comprises at least one actuation device to vary the angles $\phi_{ij}$ of the reflector $R_{ij}$ (12), in which the movement of each reflector $R_{ij}$ (12) can be either individual or synchronous with respect to the other reflectors (12).

9. The solar concentrating system (1) according to any of the preceding claims, **characterized in that** the at least one receiver (11) comprises a vacuum tube-type conduit (11.1), or it comprises a plurality of simple conduits.

10. The solar concentrating system (1) according to any of the preceding claims, **characterized in that** each angle $\lambda_{ij}$ holds the following condition:

$$\lambda_{11} = \lambda_{12} = \cdots = \lambda_{nm} = \lambda \; ; \; i \in \{1, \dots, n\}; \; j \in \{1, \dots, m\}.$$

11. The solar concentrating system (1) according to any of the preceding claims, **characterized in that** the following condition is held:

$$\lambda = 24\,°.$$

12. The solar concentrating system (1) according to any of the preceding claims, **characterized in that** the plurality of $m$ reflectors (12) of each collector $C_i$ (10) are grouped in two sections symmetrically arranged on either side of the at least one receiver (11).

13. The solar concentrating system (1) according to any of the preceding claims, **characterized in that** the surface on which the longitudinal axes (12.3) about which the reflectors (12) rotate are contained is a quadric surface, particularly a circular cylinder, a hyperbolic cylinder, a parabolic cylinder, or an elliptical cylindrical, or sections of the foregoing.

14. A concentrating installation (100) comprising a solar concentrating system (1) according to any of claims 1 to 13.

Fig. 1

Fig. 2

Fig. 3

Fig. 4a

Fig. 4b

Europäisches
Patentamt

European
Patent Office

Office européen
des brevets

# EUROPEAN SEARCH REPORT

**Application Number**

EP 18 38 2454

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 20 2008 011468 U1 (NIKOLIC ZIVOMIR [HR]) 30 October 2008 (2008-10-30) * paragraphs [0010], [0016] - [0018], [0020]; figure 1 * | 1,4,8, 12-14 | INV. F24S30/425 F24S23/77 |
| X | US 2014/366868 A1 (LIU YANG [CN] ET AL) 18 December 2014 (2014-12-18) * paragraphs [0011], [0014], [0023], [0038] - [0040], [0042], [0046] - [0050]; figures 1-4 * | 1,8,9, 12,14 | |
| X | FR 2 982 349 A1 (FILLON GWENAEL JOCELYN DANIEL [FR]) 10 May 2013 (2013-05-10) * page 2, line 1 - page 6, line 2 * * page 11, line 34 - page 12, line 8; figures 1-7 * | 1,8, 12-14 | |
| X | FR 2 501 344 A1 (BRULEFERT ANNICK [FR]) 10 September 1982 (1982-09-10) * page 2, line 8 - page 3, line 28; figure 1 * | 1-3, 8-10,12, 14 | |

**TECHNICAL FIELDS SEARCHED (IPC)**

F24S

The present search report has been drawn up for all claims

| Place of search | Date of completion of the search | Examiner |
|---|---|---|
| The Hague | 14 November 2018 | Beltzung, Francis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 38 2454

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2018

| Patent document cited in search report | Publication date | Patent family member(s) | | Publication date |
|---|---|---|---|---|
| DE 202008011468 U1 | 30-10-2008 | AT | 10299 U1 | 15-12-2008 |
| | | CH | 697865 A2 | 13-03-2009 |
| | | DE 202008011468 U1 | | 30-10-2008 |
| US 2014366868 A1 | 18-12-2014 | AU | 2013225488 A1 | 25-09-2014 |
| | | CA | 2866096 A1 | 06-09-2013 |
| | | CN | 103293653 A | 11-09-2013 |
| | | EP | 2821835 A1 | 07-01-2015 |
| | | MA | 20150024 A1 | 30-01-2015 |
| | | US | 2014366868 A1 | 18-12-2014 |
| | | WO | 2013127317 A1 | 06-09-2013 |
| | | ZA | 201406861 B | 31-08-2016 |
| FR 2982349 A1 | 10-05-2013 | FR | 2982349 A1 | 10-05-2013 |
| | | FR | 2982353 A1 | 10-05-2013 |
| FR 2501344 A1 | 10-09-1982 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012025356 A1